# EUROPEAN PATENT SPECIFICATION

(11) **EP 3 382 265 B1**
(45) Date of publication and mention of the grant of the patent: **02.02.2022**
(21) Application number: 17000880.9
(22) Date of filing: 23.05.2017
(51) Int. Cl.: F21S 41/148, F21S 41/255, F21S 41/365, F21S 41/64, F21S 41/663, F21S 41/683

(54) **LAMP FOR VEHICLE**
SCHEINWERFER FÜR EIN FAHRZEUG
PHARE POUR VÉHICULE

(30) Priority: 30.03.2017 KR 20170041045
(43) Date of publication of application: 03.10.2018
(73) Proprietor: ZKW Group GmbH, 3250 Wieselburg (AT)
(72) Inventor: NA, Taeyoung, Seoul 07336 (KR); Park, Sangshin, Seoul 07336 (KR)
(74) Representative: Patentanwaltskanzlei Matschnig & Forsthuber OG

(56) References cited:
- EP-A2- 2 159 479
- EP-A2- 2 546 569
- JP-A- 2014 120 342
- KR-A- 20120 127 046
- KR-A- 20150 068 117
- KR-A- 20160 065 558
- US-A1- 2008 062 709

## Description

### CROSS-REFERENCE TO RELATED APPLICATION

This application claims the priority benefit of Korean Patent Application No. 10-2017-0041045, filed on March 30, 2017 in the Korean Intellectual Property Office.

### BACKGROUND OF THE INVENTION

### 1. Field of the invention

The present invention relates to a lamp for a vehicle.

### 2. Description of the Related Art

A vehicle is an apparatus that moves in a direction desired by a user riding therein. A representative example of a vehicle may be an automobile.

A variety of lamps are provided in the vehicle. For example, a headlamp and rear combination lamps are provided in the vehicle.

In particular, the headlamp merely gives the visibility to a driver at night. The headlamp outputs a low beam or a high beam according to a beam pattern.

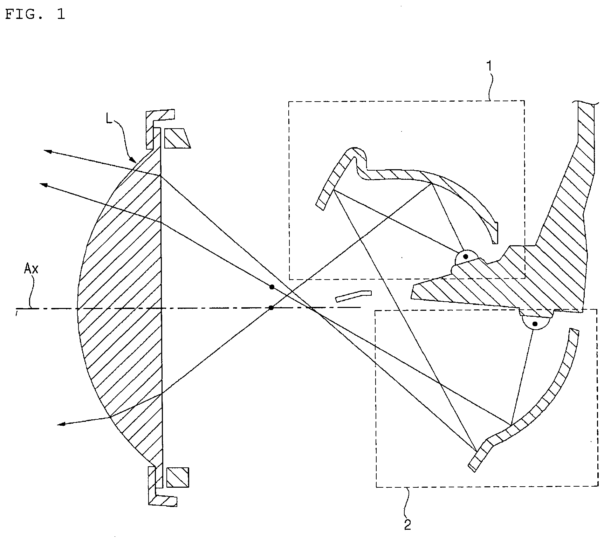

FIG. 1 is a headlamp according to an existing technology. Referring to FIG. 1, the headlamp according to the existing technology includes a low beam module 1 and a high beam module 2. The low beam module 1 is disposed above an optical axis Ax of a lens L, while the high beam module 2 is disposed below the optical axis Ax of the lens L.

In this case, it is necessary to secure space below and above the optical axis Ax of the lens L in order to arrange components.

US 2008/062709 A1 discloses a vehicular lamp with a light source unit that includes a main reflector for reflecting light irradiated from a first light source, a projection lens that condenses and radiates light reflected by the main reflector, and a shade that blocks a part of the light reflected by the main reflector, wherein the light source unit further includes a second light source, which is disposed on the opposite side from the projection lens provided on the shade, and the shade is formed with a light transmission portion which is an opening that allows the light irradiated from the second light source to pass therethrough to the projection lens.

### SUMMARY OF THE INVENTION

The present invention has been made in view of the above problems, and it is one object of the present invention to provide a lamp for a vehicle, which occupies a smaller space.

Objects of the present invention should not be limited to the aforementioned objects and other unmentioned objects will be clearly understood by those skilled in the art from the following description.

In accordance with an embodiment of the present invention, the above and other objects can be accomplished by the provision of a lamp for a vehicle according to claim 1.

The details of other embodiments are included in the following description and the accompanying drawings.

The embodiments of the present invention have one or more effects as follows.

First, as first and second light sources are disposed to output a light in the same direction, it is possible to reduce the space occupied by the lamp in a vehicle. Second, by controlling movement of a third reflector, it is possible to generate a beam pattern necessary or suitable for a situation.

Third, as a transparent display is included, a lamp for a vehicle is able to output an image.

Effects of the present invention should not be limited to the aforementioned effects and other unmentioned effects will be clearly understood by those skilled in the art from the claims.

### BRIEF DESCRIPTION OF THE DRAWINGS

The embodiments will be described in detail with reference to the following drawings in which like reference numerals refer to like elements wherein:
FIG. 1 is a cross-sectional view of a lamp for a vehicle according to an existing technology;
FIG. 2 is a diagram illustrating external appearance of a vehicle according to an embodiment of the present invention;
FIG. 3A is a cross-sectional view of a lamp for a vehicle according to an embodiment of the present invention;
FIGS. 3B and 3C are diagrams for explanation of a lamp for a vehicle based on a light generated by a lamp for a vehicle according to an embodiment of the present invention;
FIG. 4 is a diagram for explanation of a pattern of a light emitted from a lamp for vehicle according to an embodiment of the present invention;
FIG. 5A is a diagram for explanation of a second reflector according to an embodiment of the present invention;
FIG. 5B is a diagram for explanation of a second reflector and a cutoff shield according to an embodiment of the present invention;
FIG. 6A is a diagram for explanation of a third reflector according to an embodiment of the present invention;
FIG. 6B is a diagram for explanation of a second beam pattern generated by a second light according to an embodiment of the present invention;
FIG. 7 is a diagram for explanation of a transparent display according to an embodiment of the present invention;
FIGS. 8 to 10 are diagrams for explanation of a driving unit and the first movement of a third reflector according to an embodiment of the present invention;
FIGS. 11 to 16 are diagrams for explanation of a driving unit and the second movement of a third reflector according to an embodiment of the present invention; and
FIG. 17 is a control block diagram illustrating a lamp for a vehicle according to an embodiment of the present invention.

### DETAILED DESCRIPTION OF THE EMBODIMENTS

Hereinafter, the embodiments disclosed in the present specification will be described in detail with reference to the accompanying drawings, and the same or similar elements are denoted by the same reference numerals even though they are depicted in different drawings and redundant descriptions thereof will be omitted. In the following description, with respect to constituent elements used in the following description, the suffixes "module" and "unit" are used or combined with each other only in consideration of ease in the preparation of the specification, and do not have or serve as different meanings. Accordingly, the suffixes "module" and "unit" may be interchanged with each other. In addition, in the following description of the embodiments disclosed in the present specification, a detailed description of known functions and configurations incorporated herein will be omitted when it may make the subject matter of the embodiments disclosed in the present specification rather unclear. In addition, the accompanying drawings are provided only for a better understanding of the embodiments disclosed in the present specification and are not intended to limit the technical ideas disclosed in the present specification.

It will be understood that although the terms "first," "second," etc., may be used herein to describe various components, these components should not be limited by these terms. These terms are only used to distinguish one component from another component.

It will be understood that when a component is referred to as being "connected to" or "coupled to" another component, it may be directly connected to or coupled to another component or intervening components may be present. In contrast, when a component is referred to as being "directly connected to" or "directly coupled to" another component, there are no intervening components present.

As used herein, the singular form is intended to include the plural forms as well, unless the context clearly indicates otherwise.

In the present application, it will be further understood that the terms "comprises", includes," etc. specify the presence of stated features, integers, steps, operations, elements, components, or combinations thereof, but do not preclude the presence or addition of one or more other features, integers, steps, operations, elements, components, or combinations thereof.

A vehicle as described in this specification may include an automobile and a motorcycle. Hereinafter, a description will be given based on an automobile.

A vehicle as described in this specification may include all of an internal combustion engine vehicle including an engine as a power source, a hybrid vehicle including both an engine and an electric motor as a power source, and an electric vehicle including an electric motor as a power source.

In some embodiments, a vehicle may be an autonomous vehicle.

In the following description, "the left side" may refer to the left side in the forward driving direction of the vehicle, and "the right side" may refer to the right side in the forward driving direction of the vehicle.

In addition, "upward" may refer to the opposite direction to gravity. An upward direction may refer to a direction to the top. Furthermore, "downward" may refer to the direction to gravity. A downward direction may refer to a direction to the bottom.

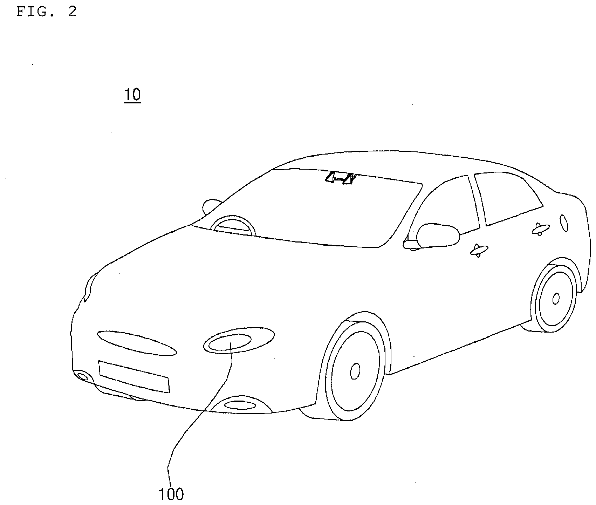

FIG. 2 is a diagram illustrating the external appearance of a vehicle according to an embodiment of the present invention.

Referring to FIG. 2, a vehicle 10 may include wheels able to be rotated by a power source, and a steering input device for adjusting a direction of travel of the vehicle 10.

The vehicle 10 may include a lamp 100 for a vehicle.

The lamp 100 may include a head lamp.

The term "overall length" means the length from the front end to the rear end of the vehicle 10, the term "overall width" means the width of the vehicle 10, and the term "overall height" means the height from the bottom of the wheel to the roof. In the following description, the term "overall length direction L" may mean the reference direction for the measurement of the overall length of the vehicle 10, the term "overall width direction W" may mean the reference direction for the measurement of the overall width of the vehicle 10, and the term "overall height direction H" may mean the reference direction for the measurement of the overall height of the vehicle 10.

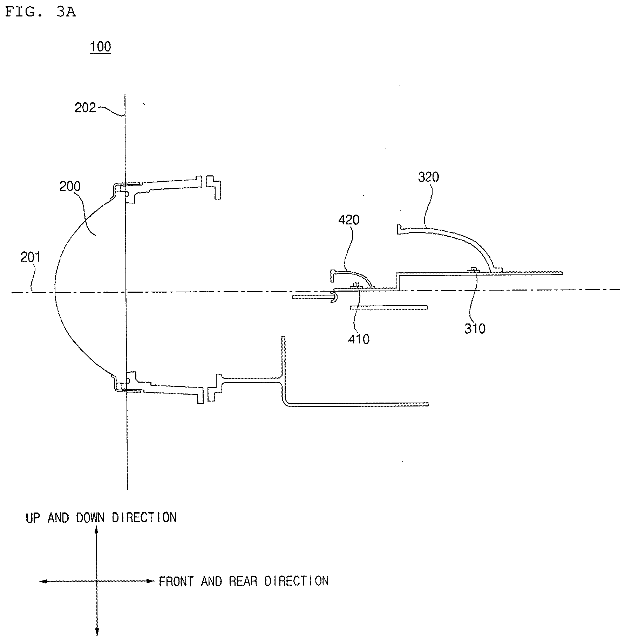

FIG. 3A is a cross-sectional view of a lamp for a vehicle according to an embodiment of the present invention.

Referring to FIG. 3A, the lamp 100 includes a lens 200, a first light source 310, a first reflector 320, a second light source 410, and a second reflector 420.

The lens 200 may be disposed before the first light source 310, the first reflector 320, the second light source 410, and the second reflector 420.

The lens 200 allows a first light, which is generated by the first light source 310, to be refracted and pass therethrough. For example, the lens 200 may allows a first light, which is generated by the first light source 310 and reflected from the first reflector 320, to be refracted and pass therethrough toward the road in front of the vehicle 10.

The lens 200 allows a second light, generated by the second light source 410, to be refracted and pass therethrough. For example, the lens 209 may allow a second light, which is generated by the second light source 410 and reflected from the second reflector 420, to be refracted and pass therethrough toward the road in front of the vehicle 10.

The lens 200 may determine an area to which a light is emitted out of the vehicle 10.

The lens 200 may have a predetermined optical axis 201. The optical axis 201 of the lens 200 may be an axis that is orthogonal to a plane 202 which is in contact with the rear-end cross-section of the lens 200 and perpendicular to a horizontal plane.

The lens 200 may be an aspheric lens.

The lens 200 may be made of a transparent material. For example, the lens 200 may be formed of glass or plastics.

The first light source 310 is disposed behind the lens 200.

The first light source 310 may be disposed behind the second light source 410 and the second reflector 420.

The first light source 310 may output a first light in the same direction as of a light output from the second light source 410.

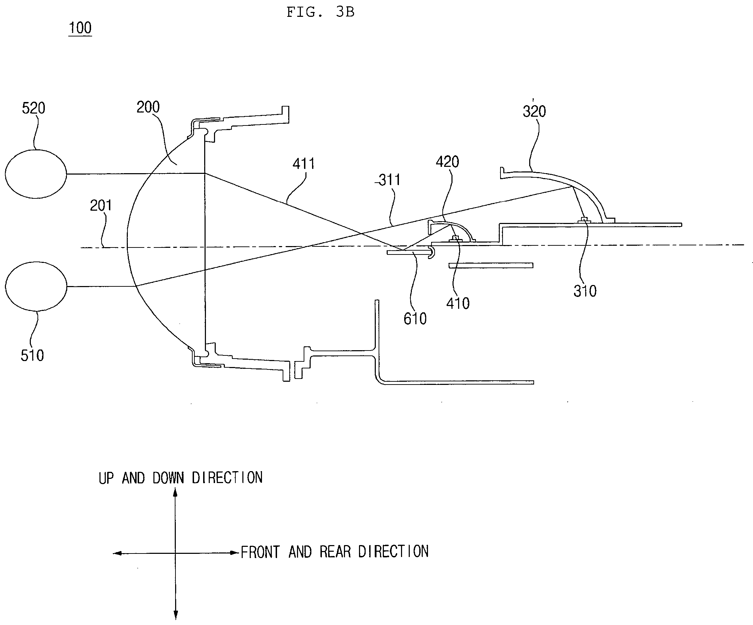

As illustrated in FIG. 3B, the first light source 310 and the second light source 410 respectively outputs a first light and a second light in a first direction. The first direction may be upward.

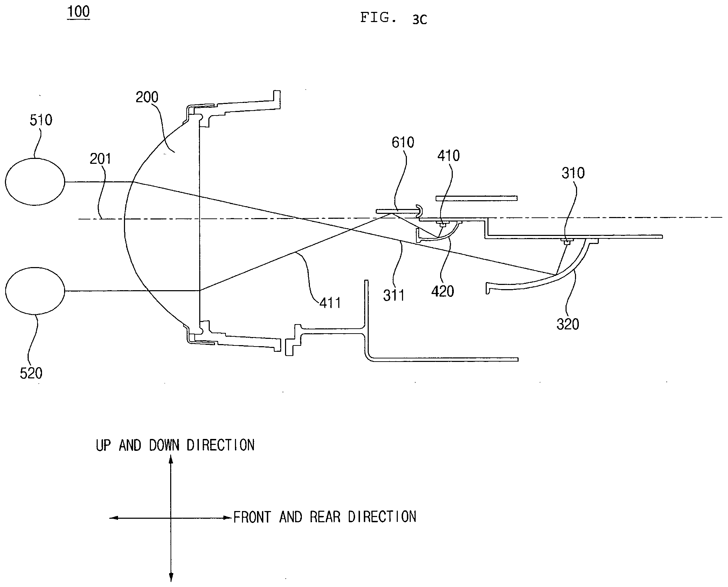

As illustrated in FIG. 3C, the first light source 310 and the second light source 410 respectively outputs a first light and a second light in a second direction. The second direction may be downward.

The first reflector 320 may has a front open portion and accommodate the first light source 310.

The first reflector 320 may be disposed behind the lens 200.

The first reflector 320 may be disposed behind the second light source 420 and the second reflector 420.

The first reflector 320 is configured to reflect a first light, which is generated by the first light source 310, toward the lens 200.

The first reflector 320 may reflect the first light, so that the first light is emitted toward the road in front of the vehicle 10.

The first reflector 320 may be formed of a material having a high reflection rate. Alternatively, on the external appearance of the first reflector 320, a surface facing the first light source 310 may be coated with a material having a high reflection rate. For example, the material having a high reflection rate may be aluminum (Al) or silver (Ag).

The second light source 410 is disposed behind the lens 200.

The second light source 410 may be disposed before the first light source 310 and the first reflector 320.

The second light source 410 may output a second light in the same direction as a light output from the first light source 310.

The second reflector 410 may have a front open portion and accommodate the second light source 410.

The second reflector 420 may be disposed behind the lens 200.

The second reflector 420 may be disposed before the first light source 310 and the first reflector 320.

The second reflector 420 is configured to reflect a second light, which is generated by the second light source 410, toward the lens 200.

The second reflector 420 may be formed of a material having a high reflection rate. Alternatively, on the external appearance of the second reflector 420, a surface facing the second light source 410 may be coated with a material having a high reflection rate. For example, the material having a high reflection rate may be aluminum (Al) or silver (Ag).

Meanwhile, a lamp for a vehicle may further include an outer lens.

The outer lens covers the opening part of a housing that defines the external appearance of the lamp for vehicle.

The outer lens may be disposed before the lens 200.

The outer lens is made of a transparent plastic or glass material. The outer lens is generally formed of an ALDC plastic material having excellent thermal conductivity.

FIGS. 3B and 3C are diagrams for explanation of a lamp for a vehicle based on a light generated by the lamp, according to an embodiment of the present invention.

As illustrated in FIG. 3B, the first light source 310 may output a first light in a first direction.

For example, the first light source 310 may output a first light 311 upward toward the first reflector 320.

The first light source 310 may be disposed to face upward

The first light source 310 may be disposed above the optical axis 201 of the lens 200.

The first reflector 320 may reflect the first light 311, which is output from the first light source 310, toward the lens 200.

For example, the first reflector 320 may reflect an incident first light 311 forward and downward. As passing through the lens 200, the first light 311 may be adjust to travel in parallel with the optical axis 201 of the lens 200.

The first reflector 320 may be disposed above the optical axis 201 of the lens 200.

The second light source 410 may output a second light in a first direction.

For example, the second light source 410 may output a second light 411 upward toward the second reflector 420.

The second light source 410 may be disposed to face upward.

The second light source 410 may be disposed above the optical axis 201 of the lens 200.

The second reflector 420 may reflect the second light 411, output from the second light source 410, toward the lens 200.

For example, the second reflector 420 may reflect an incident second light 411 forward and downward. As passing through the lens 300, the second light 411 may be adjust to travel in parallel with the optical axis 201 of the lens 200.

The second reflector 420 may be disposed above the optical axis 201 of the lens 200.

Meanwhile, the lamp 10 further includes a third reflector 610.

The third reflector 610 may be formed extending in a horizontal direction (e.g., the left and right direction).

The third reflector 610 may be formed of a material having a high reflection rate. Alternatively, the top of the third reflector 610 may be coated with a material having a high reflection rate. For example, the material having a high reflection rate may be aluminum (Al) or silver (Ag).

The second reflector 420 may reflect the second light 411, output from the second light source 410, toward the third reflector 610.

The third reflector 610 may reflect the second light 411, reflected from the second reflector 420, toward the lens 200.

The third reflector 610 may reflect the second light 411, which is reflected downward by the second reflector 420, upward.

For example, the third reflector 610 may reflect an incident second light 411 forward and upward.

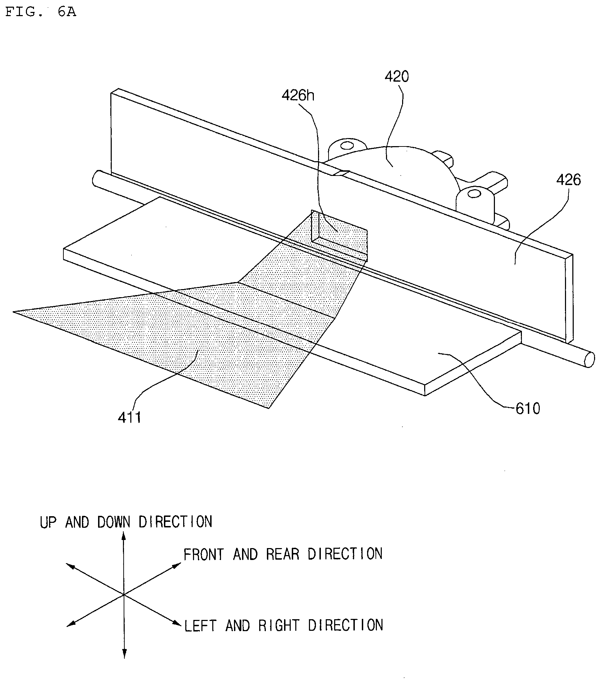

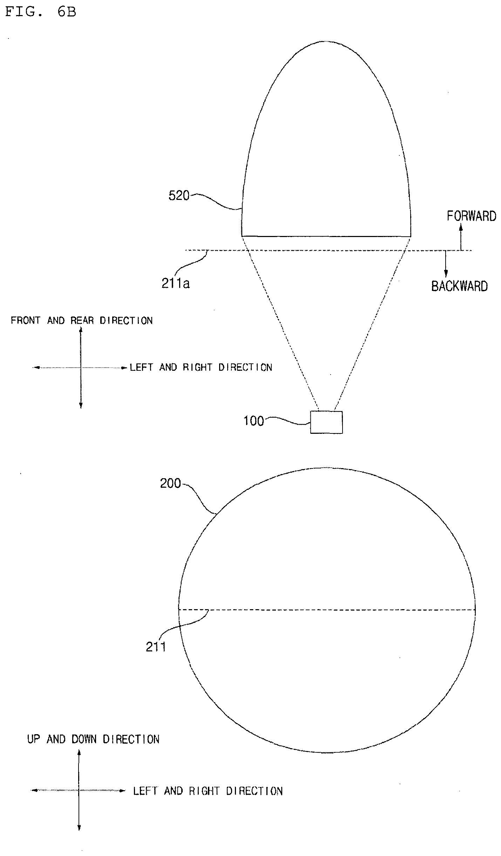

The third reflector 610 will be described in more detail with reference to FIG. 6 and other following drawings.

As illustrated in FIG. 3C, the first light source 310 may output a first light in a second direction.

For example, the first light source 310 may output the first light 311 downward toward the first reflector 320.

The first light source 310 may be disposed to face downward.

The first light source 310 may be disposed below the optical axis 201 of the lens 200.

The first reflector 320 may reflect the first light 311, output from the first light source 310, toward the lens 200.

For example, the first reflector 320 may reflect an incident first light 311 forward and upward. As passing through the lens 200, the first light 311 may be adjust to travel in parallel with the optical axis 201 of the lens 200.

The first reflector 320 may be disposed below the optical axis 201 of the lens 200.

The second light source 410 may output a second light in a second direction.

For example, the second light source 410 may output the second light 411 downward toward the second reflector 420.

The second light source 410 may be disposed to face downward.

The second light source 410 may be disposed below the optical axis 201 of the lens 200.

The second reflector 420 may reflect the second light, output from the second light source 410, toward the lens 200.

For example, the second reflector 420 may reflect an incident second light 411 forward and upward. As passing through the lens 200, the second light 411 may be adjust to travel in parallel with the optical axis 201 of the lens 200.

The second reflector 420 may disposed below the optical axis 201 of the lens 200.

Meanwhile, the lamp 100 may further include a third reflector 610.

The third reflector 610 may be formed extending in the horizontal direction (e.g., the left and right direction).

The third reflector 610 may be formed of a material having a high reflection rate. Alternatively, the third reflector 610 may be coated with a material having a high reflection rate. For example, the material having a high reflection rate may be aluminum (Al) or silver (Ag).

The second reflector 420 may reflect the second light 411, output from the second light source 410, toward the third reflector 610.

The third reflector 610 may reflect the second light 411, reflected from the second reflector 420, toward the lens 200.

The third reflector 610 may reflect the second light 411, reflected upward from the second reflector 410, downward.

For example, the third reflector 610 may reflect an incident second light 411 forward and upward.

The third reflector 610 will be described in more detail with reference to FIG. 6 and other following drawings.

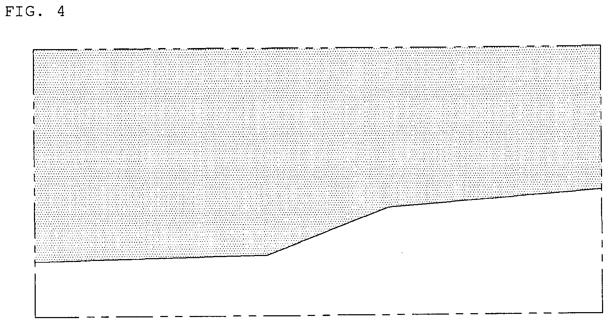

FIG. 4 is a diagram for explanation of a pattern of a light emitted from a lamp for vehicle according to an embodiment of the present invention.

FIG. 4 is an example of a beam pattern that is seen when looking forward from a left-hand (LH) drive vehicle 10.

Referring to FIG. 4, a light emitted from the lamp 100 may have a pattern that prevents dazzling a driver of an opposing vehicle.

The opposing vehicle is positioned on the left side of the vehicle 10, and thus, the left side of the irradiation area is smaller than the right side thereof. In this case, the lamp 100 needs to emit light such that a light emitted into the left side of the irradiation area has a longer emission length than a light emitted into the right side.

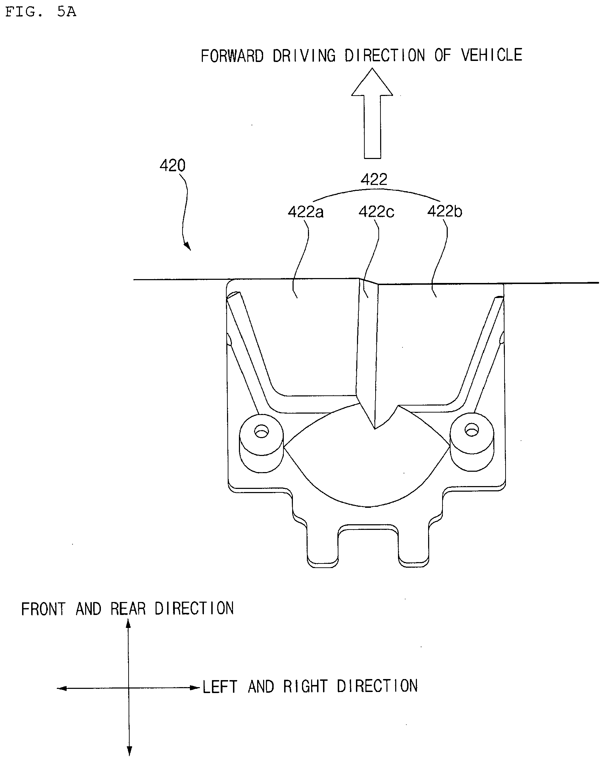

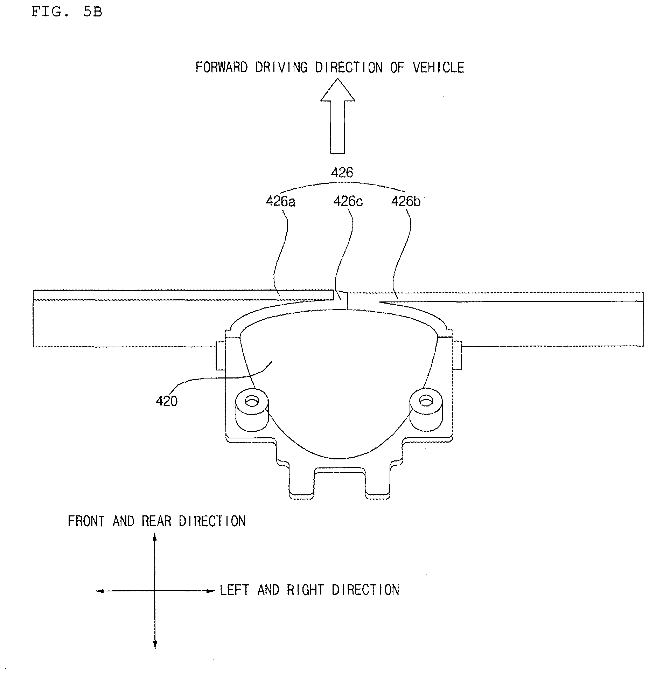

Due to characteristics described with reference to FIGS. 5A and 5B, the lamp 100 according to an embodiment of the present invention may have a pattern that prevents dazzling a driver of an opposing vehicle.

FIG. 5A is a diagram for explanation of a second reflector according to an embodiment of the present invention.

FIG. 5A is an example of a second reflector seen from the top to the bottom.

Referring to FIG. 5A, the second reflector 420 may block part of the first light 311 reflected from the first reflector 320.

The second reflector 420 may function as a cutoff shield. In this case, the second reflector 420 may be formed of a smaller size than the first reflector 320.

Part of the first light 311, not blocked by the second reflector 420, may pass through the lens 200 to thereby form a first beam pattern 510 (see FIGS. 3A and 3B).

For example, part of the first light 311, not blocked by the second reflector 420, may pass through the lens 200 and be emitted toward the road in front of the vehicle 10 to thereby function as a low beam.

The second reflector 420 may include a reflection part and a shield part 422.

The reflection part may be a surface of the second reflector 420 which faces the second light source 410.

The reflection part may reflect the second light 411 generated by the second light source 410.

For example, the reflection part may reflect the second light 411 toward the lens 200.

For example, the reflection part may reflect the second light 411 toward the third reflector 610.

The shield part 422 may be formed on the rear surface of the reflection part.

The shield part 422 may include an upper portion 422a, a lower portion 422b, and a connection portion 422c.

A step may be formed between the upper portion 422a and the lower portion 422b.

The upper portion 422a may protrudes upward relative to the lower portion 422b.

The lower portion 422b may be concaved upward relative to the upper portion 422a.

The connection portion 422c may connect the upper portion 422a and the lower portion 422b.

The connection portion 422c may be formed extending downward from one end of the upper portion 422a. The connection portion 422c may have a specific gradient.

The connection portion 422c may be formed extending upward from one end of the lower portion 422b.

Due to the above-described shape of the shield part 422, the first light 311 emitted toward the road in front of the vehicle 10, the first light 311 may have a pattern that prevents dazzling a driver of an opposing vehicle.

FIG. 5B is a diagram for explanation of a second reflector and a cutoff shield according to an embodiment of the present invention.

Referring to FIG. 5B, the lamp 100 may further include a cutoff shield 426, unlike the example shown in FIG. 5A.

The cutoff shield 426 may be in the form of a plate. The cutoff shield 426 may stand upright, so that the large surfaces thereof face forward and backward, respectively.

The cutoff shield 426 may be disposed before the second reflector 420.

One surface of the cutoff shield 426 may be in contact with the second reflector 420.

The cutoff shield 426 may have a hole 426h formed thereon. The hole 426h may induce a light, which is generated by the second light source 410, to travel toward the lens 200.

The cutoff shield 426 may include an upper portion 426a, a lower portion 426b, and a connection portion 426c.

A step may be formed between the upper portion 416a and the lower portion 426b.

The upper portion 426a may protrude upward relative to the lower portion 426b.

The lower portion 426b may be concaved downward relative to the upper portion 426a.

The connection portion 426c may connect the upper portion 426a and the lower portion 426b.

The connection portion 426c may be formed extending downward from one end of the upper portion 426a. The connection portion 426c may have a predetermined gradient.

The connection portion 426c may be formed extending upward from one end of the lower portion 426b.

Due to the above-described shape of the cutoff shield 426, a first light 311 emitted toward the road in front of the vehicle 10 may have a pattern that prevents dazzling a driver of an opposing vehicle.

FIG. 6A is a diagram for explanation of a third reflector according to an embodiment of the present invention.

Referring to FIG. 6A, the lamp 100 further includes a third reflector 610.

The third reflector 610 may be in the form of a plate. The third reflector 610 may be laid down, so that the large surfaces thereof face upward and downward, respectively.

The third reflector 610 may be in a rectangular shape, when viewed from the top.

The third reflector 610 may be formed extending in the left and right direction.

The third reflector 610 may reflect a second light 411 which is reflected from the second reflector 420.

The third reflector 610 may be formed of a material having a high reflection rate. Alternatively, the top surface of the third reflector 610 may be coated with a material having a high reflection rate. For example, the material having a high reflection rate may be aluminum (Al) or silver (Ag).

The second reflector 420 may reflect a second light 411, which is output from the second light source 410, toward the third reflector 610.

The third reflector 610 may reflect the second reflector 411, which is reflected from the second reflector 420, toward the lens 200.

The third reflector 610 may reflect the second light 411, which is reflected downward from the second reflector 420, upward.

For example, the third reflector 610 may reflect an incident second light 411 forward and upward.

The second light 411 reflected from the third reflector 610 may pass through the lens 200 to thereby form a second beam pattern 520 (see FIGS. 3A and 3B).

For example, the second light 411 may be reflected from the third reflector 610, pass through the lens 200, and be emitted toward the road in front of the vehicle 10 to thereby function as a high beam.

FIG. 6B is a diagram for explanation of a second beam pattern generated by a second light according to an embodiment of the present invention.

Referring to FIG. 6B, a second beam pattern 520 generated by a second light 411 may be biased forward or backward with reference to a reference line 211a, which corresponding to a centerline 211 formed in the left and right direction of the lens 200, in the entire irradiation area.

As illustrated in FIG. 6B, the lens 200 is in a circular shape, when viewed from behind.

The centerline 211 may be defined as an imaginary line that extends in the left and right direction that horizontally divides the lens 200 in half.

The reference line 211a may be defined as an imaginary line that matches with the centerline 211 of the lens 200 when the second light 411 is emitted toward the road in front of the vehicle 10.

If the second beam pattern 520 is biased forward with reference to the reference line 211a, the second beam pattern 520 may function as a high beam.

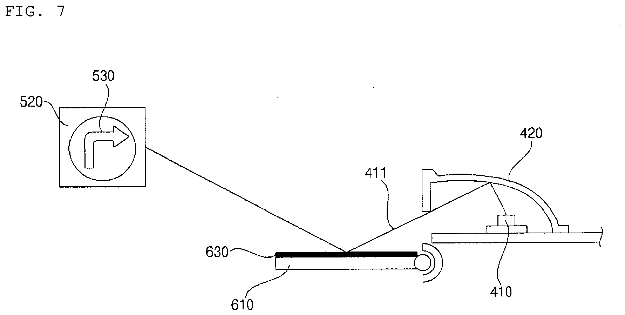

FIG. 7 is a diagram for explanation of a transparent display according to an embodiment of the present invention.

Referring to FIG. 7, the lamp 100 further includes a transparent display 630.

The transparent display 630 may be disposed on a third reflector.

The transparent display 630 may form specific content.

The transparent display 630 may allow some or all of the second light 411, which is generated by the second light source 410, to pass therethrough.

The transparent display 630 may remain transparent usually. In this case, the transparent display 630 may allow the second light 411, which is generated by the second light source 410, to pass therethrough.

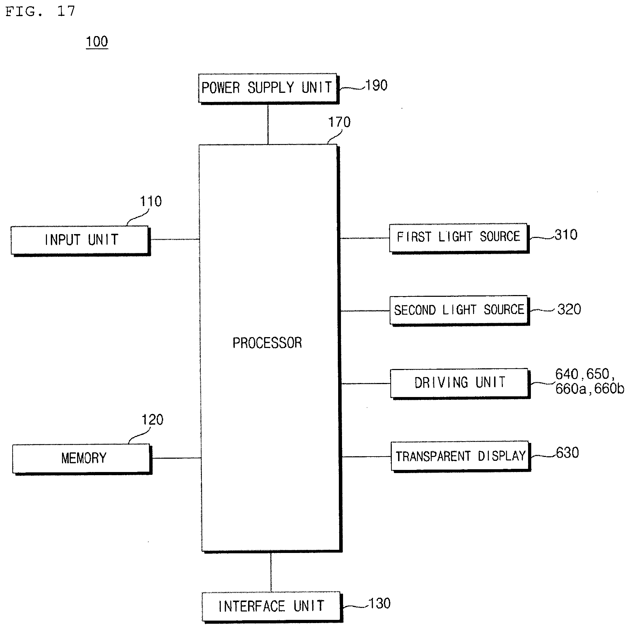

The transparent display 630 may operate based on a control signal received from a processor 170 (see FIG. 17).

In one region of the transparent display 630, specific content may be displayed. The content may be displayed in contrast and color. In the case where the second light 411 is displayed after passing through the transparent display 630 in which the content is displayed, the second light 411 passing through a content displayed region of the transparent display 630 may have a brightness level or color different from that of the second light 411 passing through a non-content displayed region of the transparent display 630. In this manner, if the second light 411 is emitted through the transparent display 630 on which specific information 530 is displayed, the specific information 530 may be displayed on an irradiation area.

In one region of the transparent display 630, a pattern may be formed based on the difference in brightness or color. The pattern may be generated based on difference in brightness or color between a first region and a second region of the transparent display 630.

Meanwhile, the transparent display 630 may be implemented as a transparent electric device having a specific transmittance level.

Meanwhile, the transparent display 630 may be divided into a projection-type transparent display or a direct-view transparent display.

Meanwhile, the transparent display 630 may be at least one of a transparent TFEL, a transparent Organic Light Emitting Diode (OLED), a transparent Liquid Crystal Display (LCD), a transparent Plasma Display Panel (PDP), a transparent Light Emitting Diode (LED), and a transparent Active Matrix Light Emitting Diode (AMOLED).

The transparent display 630 may be controlled by the processor 170 (see FIG. 17).

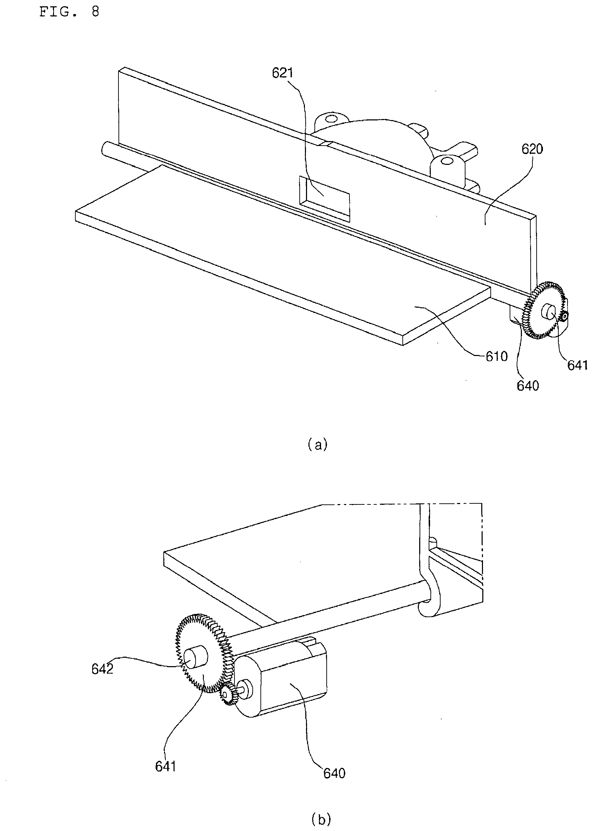

FIGS. 8 to 10 are diagrams for explanation of a driving unit and the first movement of a third reflector according to an embodiment of the present invention.

FIG. 8 is a diagram illustrating a driving unit, a driving force transfer unit, and a third reflector according to an embodiment of the present invention.

Referring to FIG. 8, the lamp 100 may further include a driving unit 640 and a driving force transfer unit 641.

The driving unit 640 may generate a driving force and provide the generated driving force. The driving force may be a rotational driving force.

The driving force 640 may include any one selected from among a motor, an actuator, and a solenoid.

The driving unit 640 may operate based on an electrical signal provided by the processor 170 (see FIG. 17).

The driving force transfer unit 641 may transfer a driving force, generated by the driving unit 640, to the third reflector 610.

As illustrated in FIG. 8, the driving force transfer unit 641 may be in the form of a gear connected to the center of a shaft 642 which is formed in the left and right direction.

Based upon a driving force provided by the driving unit 640, the third reflector 610 may rotate in the up and down direction relative to the shaft 641, formed in the left and right direction.

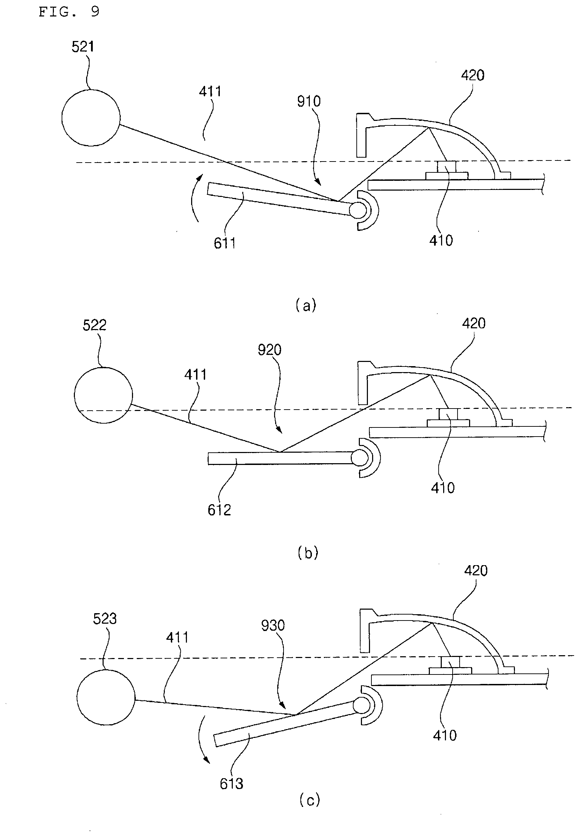

FIG. 9 is a diagram for explanation of rotational movement of a third reflector according to an embodiment of the present invention.

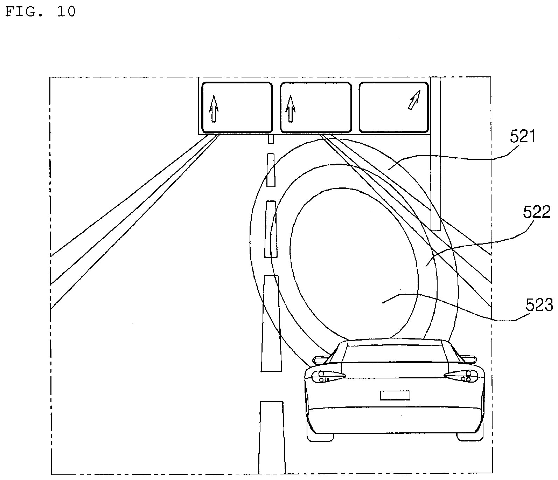

FIG. 10 is a diagram for explanation of change in a beam pattern in response to rotational movement of a third reflector according to an embodiment of the present invention.

With reference to the drawings, an emission length of the second light 411 may be adjusted based on rotation of the third reflector 610.

Based upon a driving force provided from the driving unit 640, the position of the third reflector 610 may be switched to a first state 910.

The first state 910 may be a state to which the third reflector 610 has been switched from a second state 920 by rotating upward relative to shaft 642, formed in the left and right direction, by the driving force.

If the position of the third reflector 610 is switched to the first state 910, the second light 411 is directed further upward, compared to when the third reflector 610 is in the second state 920. In this case, the second light 411 may be emitted to travel longer compared to when the third reflector 610 is in the second state 920. In this case, a second beam pattern 521 formed in the first state 910 is larger than a second beam pattern 522 formed in the second state 920.

Based upon a driving force provided by the driving unit 640, the third reflector 610 may be switched to the second state 920.

The second state 920 may be a state to which the third reflector 610 is in parallel with the ground.

The second state 920 may be a default state set in the manufacturing process of the lamp 100.

Based upon a driving force provided by the driving unit 640, the third reflector 610 may be switched to a third state 930.

The third state 930 may be a state to which the third reflector 610 has been switched from the second state 920 by rotating downward relative to the shaft 642, formed in the left and right direction, by the driving force.

If the third reflector 610 is switched to the third state 930, the second light 411 may be emitted to travel a shorter distance compared to when the third reflector 610 is in the second state 920. In this case, a second beam pattern 523 formed in the third state 930 is formed smaller than the second beam pattern 522 formed in the second state 920.

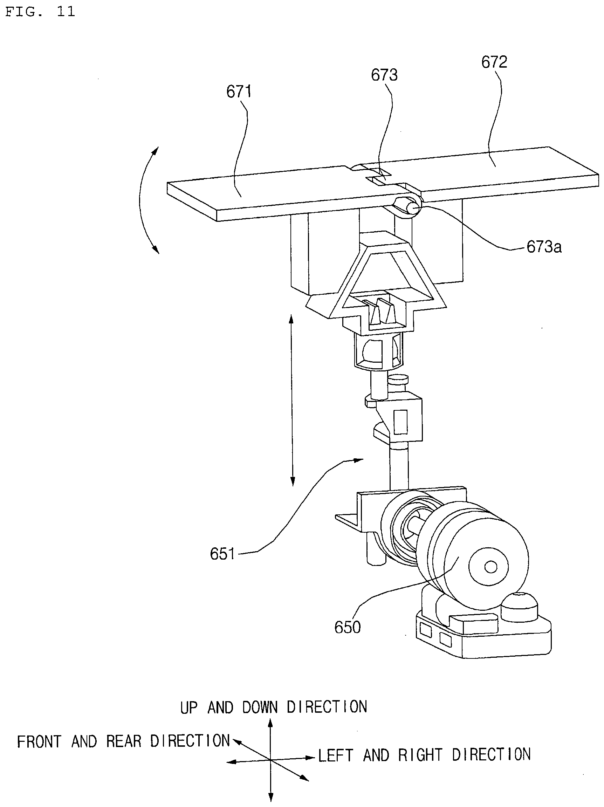

FIGS. 11 to 16 are diagrams for explanation of a driving unit and the second movement of a third reflector according to an embodiment of the present invention.

FIG. 11 is a diagram illustrating a driving unit, a driving force transfer unit, and a third reflector according to an embodiment of the present invention.

Referring to FIG. 11, the lamp 100 may further include a driving unit 650 and a driving force transfer unit 651.

The driving unit 650 may generate a driving force and provide the generated driving force. The driving force may be a rotational driving force.

The driving unit 650 may include any one selected from among a motor, an actuator, and a solenoid.

The driving unit 650 may operate based on an electric signal provided by the processor 170 (see FIG. 17).

The driving force transfer unit 651 may transfer a driving force, generated by the driving unit 650, to the third reflector 610.

Meanwhile, the third reflector 610 may include a first mirror 671, a second mirror 672, and a hinge 673 formed between the first mirror 671 and the second mirror 672.

The hinge 673 may be mechanically connected to the first mirror 671 and the second mirror 672.

The hinge 673 may include a hinge 673a.

The driving force transfer unit 651 may transfer a driving force to the hinge 673. In this case, the first mirror 671 and the second mirror 672 may rotate together in the up and down direction relative to the hinge shaft 673a, formed in the front and rear direction, based upon a driving force.

For example, the driving force transfer unit 651 may convert rotational movement into linear movement of the up and down direction. In response to a rotational driving force provided from the driving unit 650, the driving force transfer unit 651 may convert the rotational driving force into a linear driving force of the up and down direction. In this case, the hinge 673 connected to the driving force transfer unit 651 may linearly move in the up and down direction. According to the linear up and down movement of the hinge 673, the first mirror 671 and the second mirror 672 rotate in the up and down direction relative to the hinge shaft 673. At this point, the first mirror 671 and the second mirror 672 may rotate bisymmetrically.

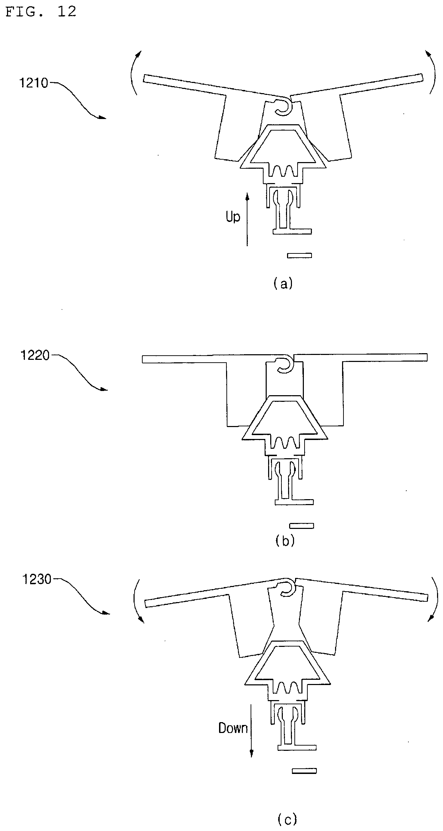

FIG. 12 is a diagram for explanation of rotational movement of a third reflector according to an embodiment of the present invention.

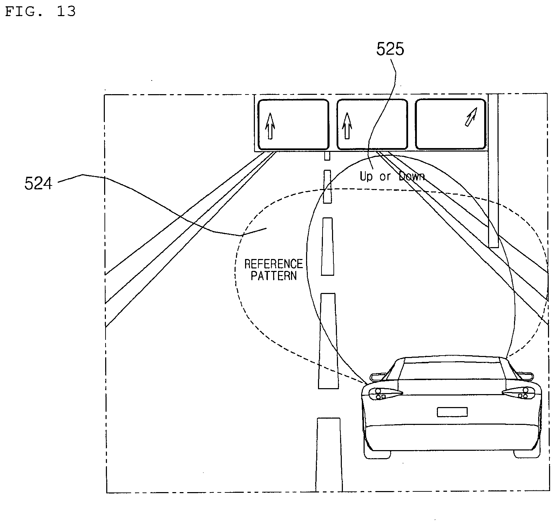

FIG. 13 is a diagram for explanation of change in a beam pattern in response to rotational movement of the third reflector according to an embodiment of the present invention.

With reference to the drawings, an emission width of a second light 411 may be adjusted based on rotation of the first mirror 671 and the second mirror 672.

Based upon a driving force provided by the driving unit 650, the first mirror 671 and the second mirror 672 may be switched to a first state 1210.

The first state 1210 may be a state to which the first mirror 671 and the second mirror 672 have been switched from a second state 1220 by moving upward relative to the hinge shaft 673a, formed in the front and rear direction, by the driving force.

If the first mirror 671 and the second mirror 672 are switched to the first state 1210, the second light 411 is directed further toward an optical axis 201 of the lens 200 as compared to when the first mirror 671 and the second mirror 672 are in the second state 1220. In this case, the second light 411 emitted in the first state 1210 may have a narrower width than the second light 411 emitted in the second state 1220. In this case, a second beam pattern 525 of the first state 1210 is narrower in the left and right direction and longer in the front and rear direction than the second beam pattern 524 of the second state 1220.

Based upon the driving force provided by the driving unit 650, the first mirror 671 and the second mirror 672 may be switched to the second state 1220.

The second state 1220 may be a state in which the first mirror 671 and the second mirror 672 are in parallel with the ground.

The second state 1220 may be a default state set in the manufacturing process of the lamp 100.

Based upon the driving force provided by the driving unit 650, the first mirror 671 and the second mirror 672 may be switched to a third state 1230.

The third state 1230 may be a state to which the first mirror 671 and the second mirror 672 have been switched from the second state 1220 by moving downward relative to the hinge 673a, formed in the front and rear direction, by the driving force.

If the first mirror 671 and the second mirror 672 are switched to the third state 1230, the second light 411 is directed further toward the optical axis 201 of the lens 200, compared to when the first mirror 671 and the second mirror 672 are in the second state 1220. In this case, the second light 411 may have a narrower width than the second light 411 emitted in the second state 1220. In this case, a second beam pattern 525 of the third state 1230 is narrower in the left and right direction and longer in the front and rear direction than the second beam pattern 524 of the second state 1220.

Meanwhile, in some embodiments, the first mirror 671 may be a convex mirror. The second mirror 672 may be a convex mirror.

When the first mirror 671 and the second mirror 672 are convex mirrors, respective beam patterns of the first, second, and third states 1210, 1220, 1230 may be different from what is described above.

When the first mirror 671 and the second mirror 672 are switched to the first state 1210, the second light 411 is directed further toward the optical axis 201 of the lens 200 as compared to when the first mirror 671 and the second mirror 672 are in the second state 1220. In this case, the second light 411 may have a narrower width than when the first mirror 671 and the second mirror 672 are in the second state 1220. In this case, the second beam pattern 525 of the first state 1210 may be narrower in the left and right direction than the second beam pattern 524 of the second state 1220.

When the first mirror 671 and the second mirror 672 are switched to the third state 1230, the second light 411 is directed further toward the opposite direction to the optical axis 201 (that is, an outward direction) as compared to when the first mirror 671 and the second mirror 672 are in the second state 1220. In this case, the second light 411 may have a larger width than when the first mirror 671 and the second mirror 672 are in the second state 1220. In this case, the second beam pattern 525 may be wider in the left and right direction than the second beam pattern 524 of the second state 1220.

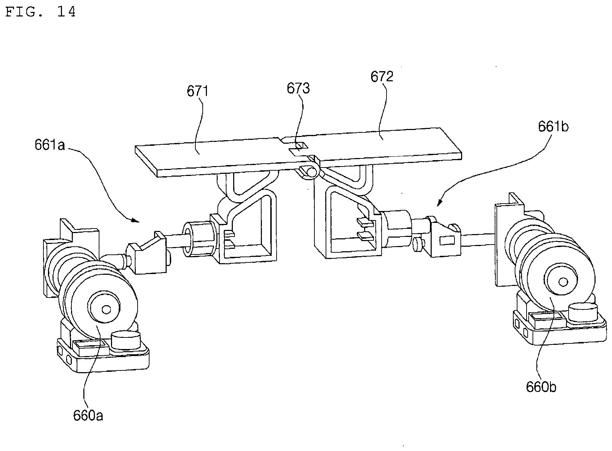

FIG. 14 is a diagram illustrating a driving unit, a driving force transfer unit, and a third reflector according to an embodiment of the present invention.

Referring to FIG. 14, the lamp 100 may further include a first driving unit 660a, a first driving force transfer unit 661a, a second driving unit 660b, and a second driving force transfer unit 661b.

Meanwhile, the third reflector 610 may include a first mirror 671, a second mirror 672, and a hinge 673 formed between the first mirror 671 and the second mirror 672.

The first mirror 671 and the second mirror 672 may rotate separately based upon a driving force provided by the first driving unit 660a and a driving force provided by the second driving unit 660b, respectively.

The hinge 673 may be mechanically connected to the first mirror 671 and the second mirror 672.

The hinge 673 may have a hinge shaft 673a. The hinge shaft 673 may be formed in the front and rear direction.

The first driving unit 660a may generate a first driving force and generate the first driving force. The first driving force may be a rotational driving force.

The first driving unit 660a may include any one selected from among a motor, an actuator, and a solenoid.

The first driving unit 660a may operate based on an electric signal provided by the processor 170 (see FIG. 17).

The first driving force transfer unit 661a may transfer the first driving force, generated by the first driving unit 660a, to the first mirror 671.

Based upon the first driving force, the first mirror 671 may rotate in the up and down direction relative to the hinge shaft 673.

For example, the first driving force transfer unit 661a may convert the rotational movement into linear up and down movement. When a rotational driving force is provided from the first driving unit 660a, the first driving force transfer unit 661a may convert the rotational driving force into a linear force of the up and down direction. In this case, the first mirror 671 connected to the first driving force transfer unit 661a may rotate in the up and down direction relative the hinge shaft 673a.

The second driving unit 660b may generate a second driving force and provide the second driving force. The second driving force may be a rotational force.

The second driving unit 660b may include any one selected from among a motor, an actuator, and a solenoid.

The second driving unit 660b may operate based on an electric signal provided by the processor 170 (see FIG. 17).

The second driving force transfer unit 661b may transfer the second driving force, generated by the second driving unit 660b), to the second mirror 671.

Based upon the second driving force, the second mirror 671 may rotate in the up and down direction relative to the hinge shaft 673a.

For example, the second driving force transfer unit 661b may convert the rotational movement into linear up and down movement. When a rotational driving force is provided from the second driving unit 660b, the second driving unit 660b may convert the rotational driving force into a linear driving force of the up and down direction. In this case, the second mirror 671 connected to the second driving force transfer unit 661b may rotate in the up and down direction relative to the hinge shaft 673a.

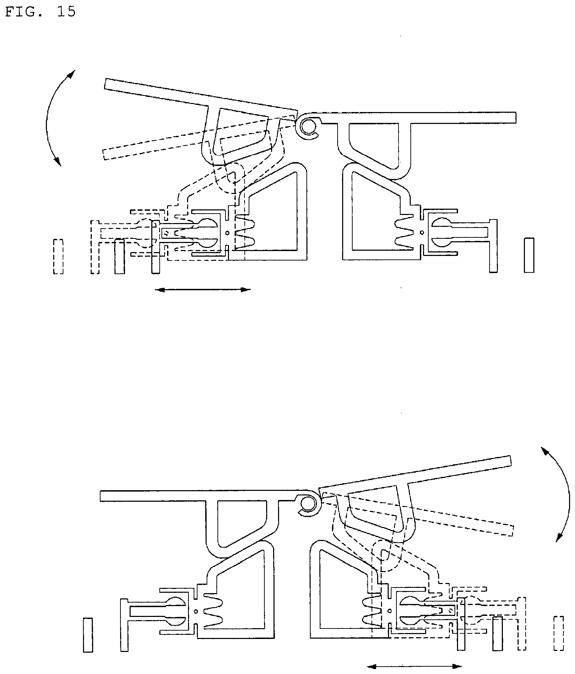

FIG. 15 is a diagram for explanation of rotational movement of a third reflector according to an embodiment of the present invention.

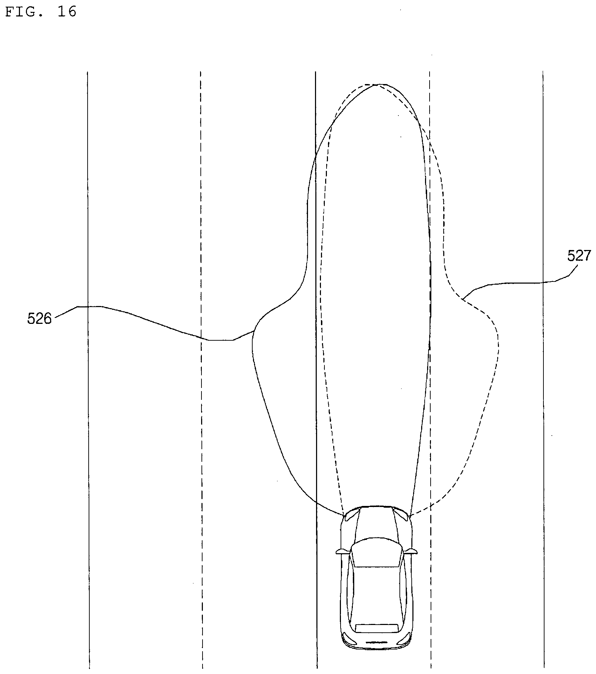

FIG. 16 is a diagram for explanation of change in a beam pattern in response to rotational movement of a third reflector according to an embodiment of the present invention.

With reference to the drawings, an emission width of a second light 411 may be adjusted based on rotation of the first mirror 671 or the second mirror 672.

Based upon a first driving force provided by the first driving unit 660a, the first driving unit 660a may be switched between the first to third states.

The first state may be a state to which the first mirror 671 has been switched from the second state by moving upward relative to the hinge shaft 673, formed in the front and rear direction, by the first driving force.

If the first mirror 671 is switched to the first state, the left side of the second light 411 is directed further toward the optical axis 201 of the lens 200, compared to when the first mirror 671 is in the second state. In this case, the left side of the second light 411 may have a narrower width than the left side of the second light 411 emitted in the second state. In this case, a second beam pattern 526 of the first state is formed such that the left side thereof is formed narrower in the left and right direction and longer in the front and rear direction than the left side of a beam pattern of the second state.

Based upon a first driving force provided by the first driving unit 660a, the first mirror 671 may be switched to a second state.

The second state may be a state to which the first mirror 671 is in parallel with the ground.

The second state may be a default state set in the manufacturing process of the lamp 100.

Based upon the first driving force provided by the first driving force 660a, the first mirror 671 may be switched to a third state.

The third state may be a state to which the first mirror 671 has been switched from the second state by moving downward relative to the hinge shaft 673a, formed in the front and rear direction, by the first driving force.

If the position of the first mirror 671 is switched to the third state, the second light 411 is directed further toward the optical axis 201 of the lens 200, compared to when the first mirror 671 is in the second state. In this case, the left side of the second light 411 may have a narrower width than the left side of the second light 411 emitted in the second state. In this case, a second beam pattern 526 of the third state is formed such that the left side thereof is narrower in the left and the right direction and longer in the front and rear direction than the left side of a beam pattern of the second state.

Based upon a second driving force provided by the second driving unit 660b, the second mirror 672 may be switched between the first to third states.

The first state may be a state to which the second mirror 672 has been switched from the second state by moving upward relative to the hinge shaft 673a, formed in the front and rear direction, by the second driving force.

If the second mirror 672 is switched to the first state, the right side of the second light 411 is directed further toward the optical axis 201 of the lens 200, compared to when the second mirror 672 is in the second state. In this case, the right side of the second light 411 may have a narrower width than the right side of the second light 411 emitted in the second state. In this case, a second beam pattern 527 of the first state is formed such that the right side thereof is narrower in the left and right direction and longer in the front and rear direction than the right side of a beam pattern of the second state.

Based upon a second driving force provided by the second driving unit 660b, the second mirror 672 may be switched to the second state.

The second state may be a state to which the second mirror 672 is in parallel with the ground.

The second state may be a default state set in the manufacturing process of the lamp 100.

Based upon the second driving force provided by the second driving unit 660b, the second mirror 672 may be switched to the third state.

The third state may be a state to which the second mirror 672 has been switched from the second state by moving downward relative to the hinge shaft 673a, formed in the front and rear direction, by the second driving force.

If the second mirror 672 is switched to the third state, the second light 411 is directed further toward the optical axis 201 of the lens 200, compared to when the second mirror 672 is in the second state. In this case, the right part of the second light 411 may have a narrower width than the right part of the second light 411 emitted in the second state. In addition, a second beam pattern 527 of the third state may be formed such that the right side thereof is narrower in the left and right direction and longer in the front and rear direction than the right side of the beam pattern of the second state.

FIG. 17 is a control block diagram illustrating a lamp for a vehicle according to an embodiment of the present invention.

Referring to FIG. 17, the lamp 100 may include an input unit 110, a memory 120, an interface unit 130, a processor 170, a first light source 310, a second light source 320, and a power supply unit 190.

In some embodiments, the lamp 100 may further include driving units 640, 650, 660a, and 660b, and a transparent display 630 individually or in combination.

The input unit 110 may include an input means that enables receiving a user input for controlling operation of the lamp 100.

The input unit 110 may receive a user input for controlling the lamp 100.

The input unit 110 may be disposed inside a vehicle 10. The input unit 110 may include a touch-type input means or a mechanical input means. The input unit 110 may receive a user input that turns on or off the lamp 100. The input unit 110 may receive a user input that enables controlling various operations of the lamp 100.

The memory 120 may store basic data for each unit, control data for the operational control of each unit, and data that is input to and output from the lamp 100.

The memory 120 may be any of various hardware storage devices, such as a ROM, a RAM, an EPROM, a flash drive, and a hard drive.

The memory 120 may store various data for the overall operation of the lamp 100, such as programs for the processing or control of the processor 170.

The interface unit 130 may exchange data with a different device included in the vehicle 10.

The interface unit 130 may receive vehicle related data or a user input, or may transmit data processed or generated by the processor to a different device.

The interface unit 130 may receive driving situation information.

The driving situation information may include at least one of the following: object information about an object outside the vehicle, navigation information, and vehicle state information.

The object information may include: information about the presence of an object, location information of the object, information on distance between the vehicle and the object, and the speed of the object relative to the vehicle 100.

The object may include a lane, a nearby vehicle, a pedestrian, a two-wheeled vehicle, a traffic signal, a light, a road, a structure, a bump, a geographical feature, an animal, etc.

The navigation information may include at least one of the following: map information; information on a set destination; information on a route to the set destination; information on various objects along the route; lane information; and information on a current location of the vehicle.

The vehicle state information may include vehicle position information, vehicle speed information, vehicle tilt information, vehicle weight information, vehicle direction information, vehicle battery information, vehicle fuel information, vehicle tire pressure information, vehicle steering information, in-vehicle temperature information, in-vehicle humidity information, pedal position information, vehicle engine temperature information, etc.

The processor 170 may be electrically connected to each component of the lamp 100. The processor 170 may control the overall operation of each component of the lamp 100.

The processor 170 may control the first light source and the second light source 320 based on a user input or driving situation information.

The processor 170 may control the driving units 640, 650, 660a, and 660b based on a user input or driving situation information.

For example, the processor 170 may control the driving unit s 640, 650, 660a, and 660b based on object information.

For example, based on information on an opposing vehicle, the processor 170 may control the driving units 650, 660a, and 660b not to emit a light toward the opposing vehicle, thereby enabled to reduce a width of the output light emitted toward the opposing vehicle.

For example, based on information on a preceding vehicle, the processor 170 may control the driving units 640, 650, 660a, and 660b not to emit a light toward the preceding vehicle, thereby enabled to reduce a length of the output light.

The processor 170 may control the transparent display 630 based on a user input or driving situation information.

For example, the processor 170 may control the transparent display 630 to display an image corresponding to object information.

For example, the processor may control the transparent display 630 to display an image corresponding to navigation information.

For example, the processor 170 may control the transparent display 630 to display an image corresponding to vehicle state information.

The first light source 310 may generate a first light. The first light source 310 may convert electrical energy into light energy under control of the processor 170. The first light source 310 may include any one selected from among a metal filament lamp, a halogen bulb , a high intensity discharge (HID) lamp, a neon gas discharge lamp, a light emitting diode (LED), and a laser diode.

The second light source 320 may generate a second light. The second light source 320 may convert electrical energy into light energy under control of the processor 170. The second light source 320 may include any one selected from among a metal filament lamp, a halogen bulb , a high intensity discharge (HID) lamp, a neon gas discharge lamp, a light emitting diode (LED), and a laser diode.

Under control of the processor 170, the power supply unit 190 may supply power required for operation of each unit of the lamp 100. In particular, the power supply unit 190 may be supplied with power from a batter inside the vehicle 10.

The driving units 640, 650, 660a, and 660b may generate a driving force under control of the processor 170.

Under control of the processor 170, the transparent display 630 may let some or all of the second light 411, generated by the second light source 410, pass therethrough.

The transparent display 630 may remain transparent usually. In this case, the transparent display 630 may let the second light 411, generated by the second light source 410, pass therethrough.

The transparent display 630 may operate based on a control signal received by the processor 170.

The above detailed description should not be construed as being limited to the embodiments set forth herein in all terms, but should be considered by way of example.

Although embodiments have been described with reference to a number of illustrative embodiments thereof, it should be understood that numerous other modifications and embodiments can be devised by those skilled in the art that will fall within the scope of the invention defined by

## Claims

1. A lamp (100) for a vehicle (10), comprising:
a lens (200);
a first light source (310) disposed behind the lens (200);
a first reflector (320) configured to reflect a first light, generated by the first light source (310), toward the lens (200);
a second light source (410) disposed behind the lens (200);
a second reflector (420) configured to reflect a second light, generated by the second light source (410), toward the lens (200),
a third reflector (610) configured to reflect the second light (411) reflected from the second reflector (420), and
a transparent display (630) disposed on said third reflector (610) and configured to form specific content, wherein the transparent display (630) is configured to allow some or all of the second light (411) to pass therethrough,
wherein the first light source (310) is configured to output the first light (311) in a generally upward or downward direction, and the second light source (410) is configured to output the second light (411) in the same direction as the first light source, and
wherein the second light (411) reflected from the third reflector (610) passes through the lens to form a second beam pattern (520).

2. The lamp (100) according to claim 1, wherein the second reflector (420) is disposed in front of the first reflector.

3. The lamp (100) according to claim 2, wherein the second reflector (420) blocks part of the first light (311) reflected from the first reflector (320).

4. The lamp (100) according to claim 3, wherein part of light not blocked by the second reflector (420) passes through the lens (200) to form a first beam pattern (510) including a cut-off line.

5. The lamp (100) according to claim 3, wherein the second reflector (420) comprises:
a reflection part configured to reflect the second light (411); and
a shield part (422) formed on a rear surface of the reflection part to generate a cut-off line.

6. The lamp (100) according to any of the preceding claims, wherein the first light source (310) is configured to output the first light (311) upward toward the first reflector (320), and the second light source (410) is configured to output the second light (411) upward toward the second reflector (420).

7. The lamp (100) according to any one of claims 1 to 6, wherein the second beam pattern (520) is a high beam pattern.

8. The lamp (100) according to any one of claims 1 to 7, wherein the second beam pattern (520) is biased forward or backward with reference to a reference line (211a), which corresponds to a centerline (211) formed in a left and right direction of the lens, in an entire irradiation area.

9. The lamp (100) according to any one of claims 1 to 8, further comprising:
a driving unit (640) configured to provide a driving force; and
a driving force transfer unit (641) configured to transfer the driving force to the third reflector (610),
wherein the third reflector (610) rotates in an up and down direction relative to a shaft (642), formed in a left and right direction, based upon the driving force.

10. The lamp (100) according to claim 9, wherein a projection distance of the second light (411) is adjusted based on rotation of the third reflector.

11. The lamp (100) according to any one of claims 1 to 10, wherein the third reflector (610) comprises:
a first mirror (671);
a second mirror (672); and
a hinge (673) formed between the first mirror (671) and the second mirror (672).

12. The lamp (100) according to claim 11, further comprising:
a driving unit (650) configured to provide a driving force; and
a driving force transfer unit (651) configured to transfer the driving force to the hinge,
wherein the first mirror (671) and the second mirror (672) rotate in an up and down direction relative to a hinge shaft (673a), formed in a front and rear direction, based upon the driving force,
and/or
wherein a projection width of the second light (411) is adjusted based on rotation of the first mirror (671) and the second mirror (672).

13. The lamp (100) according to claim 11, further comprising:
a first driving unit (660a) configured to provide a first driving force;
a first driving force transfer unit (661a) configured to transfer the first driving force to the first mirror (671);
a second driving unit (660b) configured to provide a second driving force; and
a second driving force transfer unit (661b) configured to transfer the second driving force to the second mirror (672),
and/or
wherein:
the first mirror (671) rotates in an up and down direction relative to a hinge shaft (673a), formed in a front and rear direction, based upon the first driving force, and
the second mirror (672) rotates in the up and down direction relative to the hinge shaft (673a) based upon the second driving force.

## Patentansprüche

1. Eine Leuchte (100) für ein Fahrzeug (10), umfassend:
eine Linse (200);
eine erste Lichtquelle (310), die hinter der Linse (200) angeordnet ist;
einen ersten Reflektor (320), der so konfiguriert ist, dass er ein erstes Licht, das von der ersten Lichtquelle (310) erzeugt wird, in Richtung der Linse (200) reflektiert;
eine zweite Lichtquelle (410), die hinter der Linse (200) angeordnet ist;
einen zweiten Reflektor (420), der so konfiguriert ist, dass er ein zweites Licht, das von der zweiten Lichtquelle (410) erzeugt wird, in Richtung der Linse (200) reflektiert,
einen dritten Reflektor (610), der so konfiguriert ist, dass er das von dem zweiten Reflektor (420) reflektierte zweite Licht (411) reflektiert, und
eine transparente Anzeige (630), die auf dem dritten Reflektor (610) angeordnet und so konfiguriert ist, dass sie einen bestimmten Inhalt bildet, wobei die transparente Anzeige (630) so konfiguriert ist, dass sie einen Teil oder das gesamte zweite Licht (411) durchlässt,
wobei die erste Lichtquelle (310) so konfiguriert ist, dass sie das erste Licht (311) in einer allgemein aufwärts oder abwärts gerichteten Richtung ausgibt, und die zweite Lichtquelle (410) so konfiguriert ist, dass sie das zweite Licht (411) in der gleichen Richtung wie die erste Lichtquelle ausgibt, und
wobei das zweite Licht (411), das von dem dritten Reflektor (610) reflektiert wird, durch die Linse läuft, um ein zweites Strahlenmuster (520) zu bilden.

2. Leuchte (100) nach Anspruch 1, wobei der zweite Reflektor (420) vor dem ersten Reflektor angeordnet ist.

3. Leuchte (100) nach Anspruch 2, wobei der zweite Reflektor (420) einen Teil des vom ersten Reflektor (320) reflektierten ersten Lichts (311) blockiert.

4. Leuchte (100) nach Anspruch 3, wobei ein Teil des vom zweiten Reflektor (420) nicht geblockten Lichts durch die Linse (200) hindurchgeht, um ein erstes Strahlenmuster (510) zu bilden, das eine Hell-Dunkel-Grenze enthält.

5. Leuchte (100) nach Anspruch 3, wobei der zweite Reflektor (420) umfasst:
einen Reflexionsteil, der so konfiguriert ist, dass er das zweite Licht (411) reflektiert; und
ein Abschirmteil (422), das auf einer hinteren Oberfläche des Reflexionsteils ausgebildet ist, um eine Hell-Dunkel-Grenze zu erzeugen.

6. Leuchte (100) nach einem der vorhergehenden Ansprüche, wobei die erste Lichtquelle (310) so konfiguriert ist, dass sie das erste Licht (311) nach oben in Richtung des ersten Reflektors (320) abgibt, und die zweite Lichtquelle (410) so konfiguriert ist, dass sie das zweite Licht (411) nach oben in Richtung des zweiten Reflektors (420) abgibt.

7. Leuchte (100) nach einem der Ansprüche 1 bis 6, wobei das zweite Strahlmuster (520) ein Fernlichtmuster ist.

8. Leuchte (100) nach einem der Ansprüche 1 bis 7, wobei das zweite Strahlmuster (520) in Bezug auf eine Bezugslinie (211a), die einer in linker und rechter Richtung der Linse gebildeten Mittellinie (211) entspricht, in einem gesamten Bestrahlungsbereich vorwärts oder rückwärts ausgerichtet ist.

9. Leuchte (100) nach einem der Ansprüche 1 bis 8, ferner umfassend:
eine Antriebseinheit (640), die so konfiguriert ist, dass sie eine Antriebskraft bereitstellt; und
eine Antriebskraftübertragungseinheit (641), die so konfiguriert ist, dass sie die Antriebskraft auf den dritten Reflektor (610) überträgt,
wobei sich der dritte Reflektor (610) in einer Aufwärts- und Abwärtsrichtung relativ zu einer Welle (642), die in einer Links- und Rechtsrichtung ausgebildet ist, basierend auf der Antriebskraft dreht.

10. Leuchte (100) nach Anspruch 9, wobei ein Projektionsabstand des zweiten Lichts (411) basierend auf der Drehung des dritten Reflektors eingestellt wird.

11. Leuchte (100) nach einem der Ansprüche 1 bis 10, wobei der dritte Reflektor (610) umfasst:
einen ersten Spiegel (671);
einen zweiten Spiegel (672); und
ein Gelenk (673), das zwischen dem ersten Spiegel (671) und dem zweiten Spiegel (672) ausgebildet ist.

12. Leuchte (100) nach Anspruch 11, ferner umfassend:
eine Antriebseinheit (650), die so konfiguriert ist, dass sie eine Antriebskraft bereitstellt; und
eine Antriebskraftübertragungseinheit (651), die so konfiguriert ist, dass sie die Antriebskraft auf das Gelenk überträgt,
wobei der erste Spiegel (671) und der zweite Spiegel (672) sich in einer Aufwärts- und Abwärtsrichtung relativ zu einer Gelenkwelle (673a), die in einer vorderen und hinteren Richtung ausgebildet ist, auf der Grundlage der Antriebskraft drehen,
und/oder
wobei eine Projektionsbreite des zweiten Lichts (411) basierend auf der Drehung des ersten Spiegels (671) und des zweiten Spiegels (672) eingestellt wird.

13. Leuchte (100) nach Anspruch 11, ferner umfassend:
eine erste Antriebseinheit (660a), die so konfiguriert ist, dass sie eine erste Antriebskraft bereitstellt;
eine erste Antriebskraftübertragungseinheit (661a), die so konfiguriert ist, dass sie die erste Antriebskraft auf den ersten Spiegel (671) überträgt;
eine zweite Antriebseinheit (660b), die so konfiguriert ist, dass sie eine zweite Antriebskraft bereitstellt; und
eine zweite Antriebskraftübertragungseinheit (661b), die zum Übertragen der zweiten Antriebskraft auf den zweiten Spiegel (672) konfiguriert ist,
und/oder
wobei:
der erste Spiegel (671) sich in einer Aufwärts- und Abwärtsrichtung relativ zu einer Gelenkwelle (673a), die in einer vorderen und hinteren Richtung ausgebildet ist, basierend auf der ersten Antriebskraft dreht, und
der zweite Spiegel (672) sich in der Auf- und Abwärtsrichtung relativ zu der Gelenkwelle (673a) auf der Grundlage der zweiten Antriebskraft dreht.

## Revendications

1. Lampe (100) pour un véhicule (10), comprenant :
une lentille (200) ;
une première source de lumière (310) disposée derrière la lentille (200) ;
un premier réflecteur (320) configuré pour réfléchir une première lumière, générée par la première source de lumière (310), vers la lentille (200) ;
une seconde source de lumière (410) disposée derrière la lentille (200) ;
un deuxième réflecteur (420) configuré pour réfléchir une deuxième lumière, générée par la deuxième source de lumière (410), vers la lentille (200),
un troisième réflecteur (610) configuré pour réfléchir la deuxième lumière (411) réfléchie par le deuxième réflecteur (420), et
un affichage transparent (630) disposé sur ledit troisième réflecteur (610) et configuré pour former un contenu spécifique, dans lequel l'affichage transparent (630) est configuré pour permettre à une partie ou à la totalité de la deuxième lumière (411) de le traverser,
dans lequel la première source de lumière (310) est configurée pour émettre la première lumière (311) dans une direction généralement vers le haut ou vers le bas, et la deuxième source de lumière (410) est configurée pour émettre la deuxième lumière (411) dans la même direction que la première source de lumière, et
dans lequel la seconde lumière (411) réfléchie par le troisième réflecteur (610) passe à travers la lentille pour former un second motif de faisceau (520).

2. Lampe (100) selon la revendication 1, dans laquelle le deuxième réflecteur (420) est disposé devant le premier réflecteur.

3. Lampe (100) selon la revendication 2, dans laquelle le deuxième réflecteur (420) bloque une partie de la première lumière (311) réfléchie par le premier réflecteur (320).

4. Lampe (100) selon la revendication 3, dans laquelle une partie de la lumière non bloquée par le deuxième réflecteur (420) passe à travers la lentille (200) pour former un premier modèle de faisceau (510) comprenant une ligne de coupure.

5. Lampe (100) selon la revendication 3, dans laquelle le deuxième réflecteur (420) comprend:
une partie de réflexion configurée pour réfléchir la deuxième lumière (411) ; et
une partie de blindage (422) formée sur une surface arrière de la partie de réflexion pour générer une ligne de coupure.

6. Lampe (100) selon l'une quelconque des revendications précédentes, dans laquelle la première source de lumière (310) est configurée pour émettre la première lumière (311) vers le haut en direction du premier réflecteur (320), et la seconde source de lumière (410) est configurée pour émettre la seconde lumière (411) vers le haut en direction du second réflecteur (420).

7. Lampe (100) selon l'une quelconque des revendications 1 à 6, dans laquelle le deuxième motif de faisceau (520) est un motif de faisceau haut.

8. Lampe (100) selon l'une quelconque des revendications 1 à 7, dans laquelle le deuxième motif de faisceau (520) est polarisé vers l'avant ou vers l'arrière par rapport à une ligne de référence (211a), qui correspond à une ligne centrale (211) formée dans une direction gauche et droite de la lentille, dans une zone d'irradiation entière.

9. Lampe (100) selon l'une quelconque des revendications 1 à 8, comprenant en outre :
une unité d'entraînement (640) configurée pour fournir une force d'entraînement ; et
une unité de transfert de force motrice (641) configurée pour transférer la force motrice au troisième réflecteur (610),
dans lequel le troisième réflecteur (610) tourne dans une direction ascendante et descendante par rapport à un arbre (642), formé dans une direction gauche et droite, sur la base de la force d'entraînement.

10. Lampe (100) selon la revendication 9, dans laquelle une distance de projection de la deuxième lumière (411) est ajustée sur la base de la rotation du troisième réflecteur.

11. Lampe (100) selon l'une quelconque des revendications 1 à 10, dans laquelle le troisième réflecteur (610) comprend :
un premier miroir (671) ;
un deuxième miroir (672) ; et
une charnière (673) formée entre le premier miroir (671) et le deuxième miroir (672).

12. Lampe (100) selon la revendication 11, comprenant en outre :
une unité d'entraînement (650) configurée pour fournir une force d'entraînement ; et
une unité de transfert de force d'entraînement (651) configurée pour transférer la force d'entraînement à la charnière,
dans lequel le premier miroir (671) et le second miroir (672) tournent dans une direction vers le haut et vers le bas par rapport à un arbre de charnière (673a), formé dans une direction avant et arrière, sur la base de la force d'entraînement,
et/ou
dans lequel une largeur de projection de la seconde lumière (411) est ajustée sur la base de la rotation du premier miroir (671) et du second miroir (672).

13. Lampe (100) selon la revendication 11, comprenant en outre :
une première unité d'entraînement (660a) configurée pour fournir une première force d'entraînement ;
une première unité de transfert de force motrice (661a) configurée pour transférer la première force motrice au premier miroir (671) ;
une deuxième unité d'entraînement (660b) configurée pour fournir une deuxième force d'entraînement ; et
une seconde unité de transfert de force d'entraînement (661b) configurée pour transférer la seconde force d'entraînement au second miroir (672),
et/ou
dans lequel :
le premier miroir (671) tourne dans une direction ascendante et descendante par rapport à un arbre d'articulation (673a), formé dans une direction avant et arrière, sur la base de la première force d'entraînement, et
le second miroir (672) tourne dans la direction ascendante et descendante par rapport à l'arbre de charnière (673a) sur la base de la seconde force d'entraînement.
